# EUROPEAN PATENT SPECIFICATION

(11) **EP 0 420 591 B1**
(45) Date of publication and mention of the grant of the patent: **08.05.1996**
(21) Application number: 90310502.1
(22) Date of filing: 25.09.1990
(51) Int. Cl.: G11B 11/10

(54) **An apparatus for reproducing information from a magneto-optical storage medium**
Gerät zur Wiedergabe von Information von einem magnetooptischen Speichermedium
Appareil pour la reproduction d'information d'un milieu d'emmagasinage magnéto-optique

(30) Priority: 26.09.1989 JP 250290/89
(43) Date of publication of application: 03.04.1991
(73) Proprietor: SHARP KABUSHIKI KAISHA, Osaka 545 (JP)
(72) Inventor: Fuji, Hiroshi, Nara-shi, Nara-ken (JP); Deguchi, Toshihisa, C-722, Daiya Heights Gakuenmae, Nara-shi, Nara-ken (JP)
(74) Representative: Huntingford, David Ian

(56) References cited:
- EP-A- 0 322 385
- EP-A- 0 325 491
- US-A- 4 691 308
- PATENT ABSTRACTS OF JAPAN vol. 12, no. 235 (P-725)6 July 1988 & JP-A-63 026 857

## Description

This invention relates to an apparatus for reproducing information from a magneto-optical storage medium, and more particularly to an apparatus which can reproduce information from a magneto-optical storage medium with an improved S/N ratio.

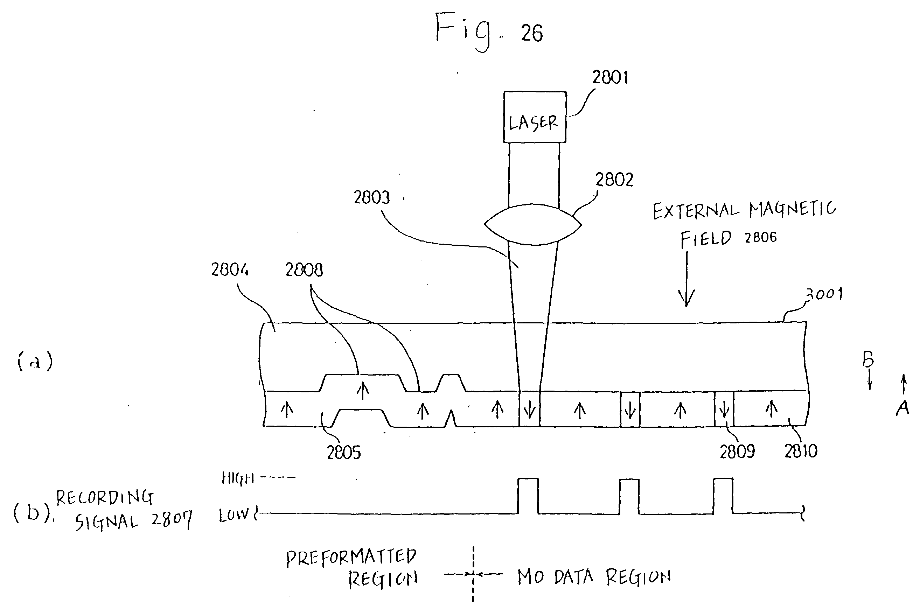

Taking a magneto-optical disk memory apparatus as an example of magneto-optical memory apparatus, the operations of recording information into a magneto-optical memory medium, and reproducing and erasing recorded information therefrom will be described with reference to Figures 26 to 33.

As shown in (a) of Figure 26, a magneto-optical memory disk 3001 has a magnetic recording layer 2805 formed on a disk substrate 2804. The axis of easy magnetization of the magnetic recording layer 2805 is in the direction perpendicular to the surface of the layer 2805, and the magnetic recording layer 2805 is initially magnetized in one direction (for example, in the direction of magnetization A). A laser beam 2803 emitted from a semiconductor laser device 2801 is converged through an objective lens 2802 to be focused as a small spot of a diameter of about 1 µm onto the magnetic recording layer 2805. The light intensity of the laser beam 2803 is controlled on the basis of a recording signal 2807 (shown in (b) of Figure 26) the level of which varies according to the information to be recorded. When the laser beam 2803 of a high light intensity is emitted, the temperature of the region of the magnetic recording layer 2805 irradiated by the laser beam rises in a localized manner. When the temperature exceeds the Curie temperature, the coercive force of the irradiated region drops markedly, causing the direction of magnetization thereof to be inverted into the same direction (direction of magnetization B) as that of an external magnetic field 2806 already applied. Thus, the information corresponding to the recording signal 2807 is recorded in the magnetic recording layer 2805. Each of the thus recorded regions is hereinafter referred to as "a mark 2809", and each of other regions as "a non-mark 2810". This means, for example, that a mark 2809 corresponds to a binary signal 1 and a non-mark 2810 to a binary signal 0, the recorded information consisting of these signals. In order to erase information recorded in the magnetic recording layer 2805, the same operation as for recording is performed, but in this case the direction of the force of the external magnetic field 2806 is reversed, thus causing the direction of magnetization to revert to the initial state (i.e., the non-mark 2810, the direction of magnetization A).

In the above example, a light modulation technique is used wherein information is recorded by modulating the intensity of the laser beam 2803 according to the recording signal 2807 while applying the external magnetic field 2806 of a fixed strength. Alternatively, a magnetic field modulation technique may be employed wherein information is recorded by modulating the direction of the external magnetic field 2806 while keeping the intensity of the laser beam 2803 at a fixed level.

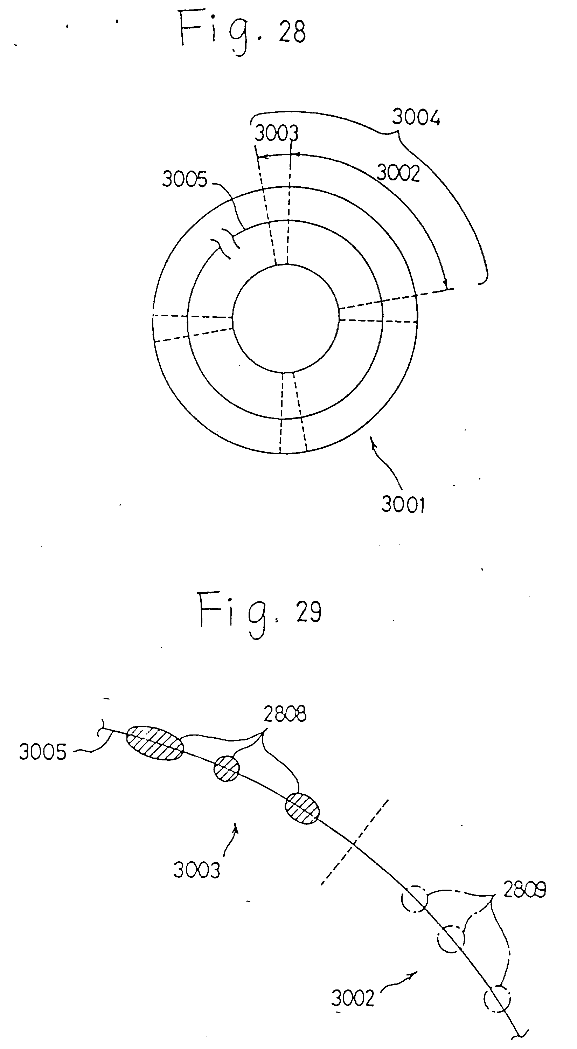

In the above example, the disk substrate 2804 may be made of a glass or plastic material, on which address information for identifying track and sector locations is prerecorded in the form of a physical irregularity (convexo-concave pattern) 2808. The physical irregularity 2808 comprises marks and non-marks of the same kinds as mentioned above. Since address information is previously engraved in a predetermined format during the manufacturing process of the disk 3001, the address information once recorded cannot be erased, and other address information cannot be additionally recorded. The region where the physical irregularity 2808 is preformed is hereinafter referred to as "the preformatted region". Information recording and erasing operations are performed on regions other than the preformatted region (such regions are referred to as "MO data regions"). As shown in Figure 28, preformatted regions 3003 and MO data regions 3002 are arranged alternately on spiral or concentric tracks 3005. One preformatted region 3003 and one MO data region 3002 are paired together to form one sector 3004. On the tracks 3005, numerous sectors are arranged, and information is recorded, reproduced and erased on a sector-by-sector basis. An address is allocated to each of the sectors 3004. As shown in Figure 29, the marks 2808 are prerecorded on the preformatted region 3009 on the track 3005 by physical means (such as a stamper), and the marks 2809 are recorded on the MO data regions 3002 by magneto-optical recording.

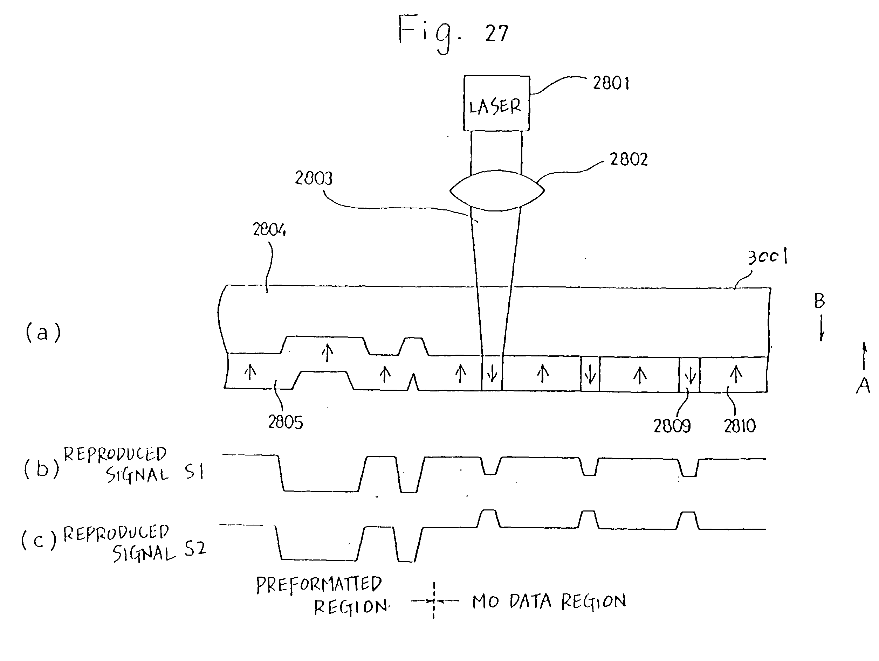

The reproducing operation on the magneto-optical disk 3001 will be described with reference to Figure 27. As shown in (a) of Figure 27, the laser beam 2803 is focused through an objective lens 2802 onto the magnetic recording layer 2805. In the reproducing operation, the laser beam 2803 is linearly polarized so that the intensity of the laser beam 2803 is weakened as compared with that for the recording and erasing operations. The plane of the linearly polarized laser beam 2803 reflected from the magneto-optical disk 3001 is caused to rotate due to the Faraday effect and the Kerr effect when the laser beam 2803 passes through and is reflected from the magnetic recording layer 2805. Between light reflected from the mark 2809 and that reflected from the non-mark 2810, the plane of polarization rotates in opposite directions from each other by the angle of rotation of the plane of polarization. The difference in the direction of polarization is detected to reproduce the recorded information, generating reproduced signals S1 and S2 as shown in (b) and (c) of Figure 27.

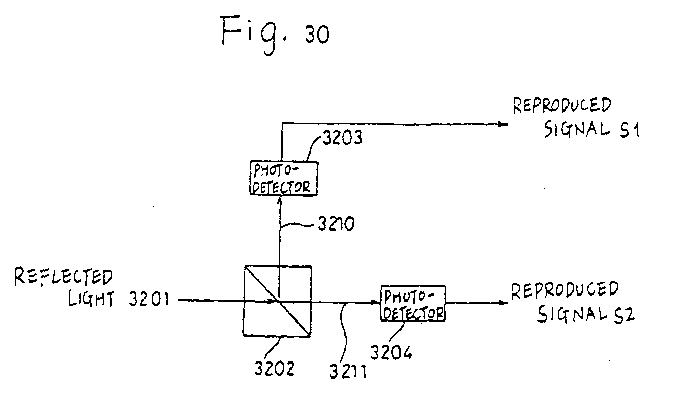

The manner of separating the signals S1 and S2 will be described with reference to Figure 30 which shows diagrammatically the optical system for reproducing information. Reflected light 3201 enters a polarized beam splitter (PBS) 3202 by which two detected lights 3210 and 3211 are produced. The two detected lights 3210 and 3211 are directed to photodetectors 3203 and 3204 respectively according to the direction of polarization of the light. Then, the photodetectors 3203 and 3204 convert the intensities of the lights into electric signals, which are output as the reproduced signals S1 end S2. In this way, the mark 2809 and the non-mark 2810 can be read out separately from the reproduced signals S1 and S2, making it possible to reproduce the information recorded in the magnetic recording layer 2805.

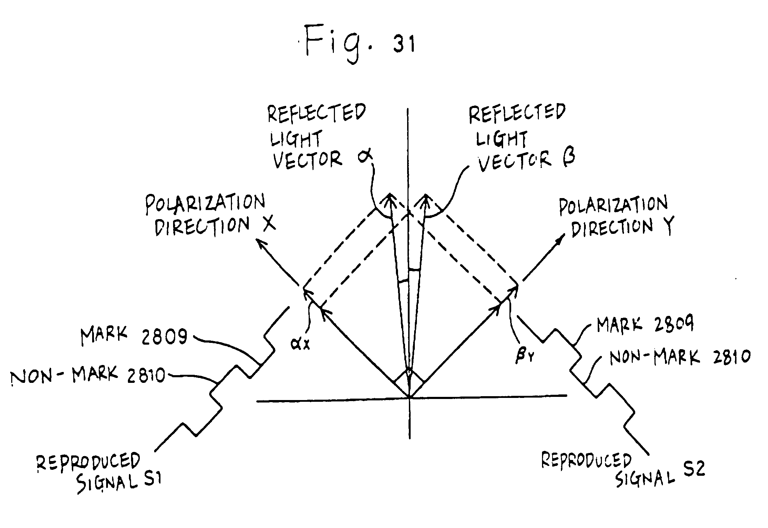

Referring to Figure 31, the description below deals with the polarity of the reproduced signals S1 and S2 obtained when reproducing information from the MO data region 3002. When the vector of light reflected from the magneto-optically recorded non-mark 2810 (with the direction of magnetization A) is denoted as α, and the vector of light reflected from the magneto-optically recorded mark 2809 (with the direction of magnetization B) as β, α and β are the vectors of reflected lights rotated in opposite directions from each other by the angle of rotation of the plane of polarization. The reflected light vectors α and β are respectively detected by the PBS 3202 for projection into two directions of polarization X and Y which are perpendicular to each other. The results of projection of the reflecting light vectors α and β in the directions of polarization X and Y, respectively, are detected light vectors α_{X} and β_{Y} which have magnitudes to match the reproduced signals S1 and S2. The detected light vectors α_{X} and β_{Y} respectively correspond to the detected lights 3210 and 3211 shown in Figure 30. As shown in Figure 31, the reproduced signal S1 is at a high level for the non-mark 2810 and at a low level for the mark 2809. On the other hand, the reproduced signal S2 is at a low level for the non-mark 2810 and at a high level for the mark 2809. The polarity of the reproduced signal S2 is opposite to that of the reproduced signal S1. The reproduced signals S1 and S2 are then supplied to a differential amplifier to improve the S/N ratio, and the information is reproduced as a result of the differential amplification.

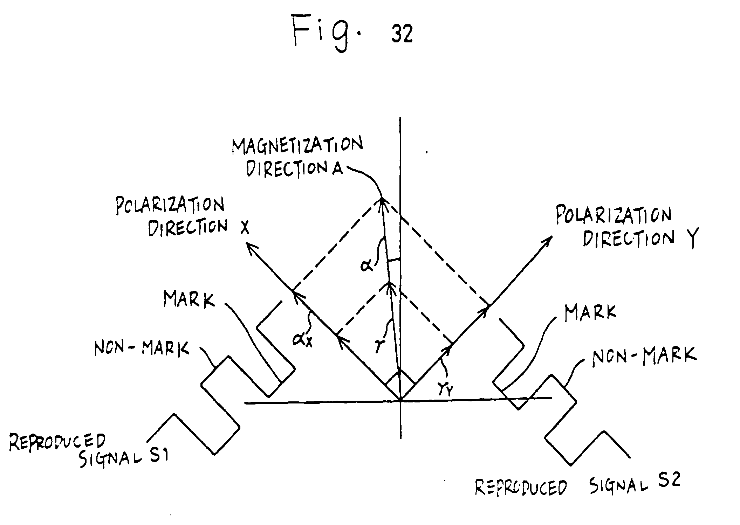

The polarity of the reproduced signals S1 and S2 obtained when reproducing information from the preformatted region 3003 in which information is recorded in the form of the physical irregularity 2808 will be described with reference to Figure 32. Since no recording or erasing operations are performed against the preformatted region 3003, the direction of magnetization of this region is fixed to the direction A. In this region, the laser beam is diffracted according to the physical shape of the irregularity 2808. This produces a longer reflected light vector α (corresponding to the reproduction of the non-mark in the irregularity region) and a shorter reflected light vector γ (corresponding to the reproduction of the mark in the irregularity region) as shown in Figure 32. These are projected by the PBS 3202 in the directions of polarization X and Y to obtain detected light vectors α_{X} and γ_{Y} respectively, the magnitudes of which correspond to the reproduced signals S1 and S2. Both of the reproduced signals S1 and S2 are at a high level for the non-mark and at a low level for the mark in the irregularity 2808. Unlike the case shown in Figure 31, both the signals S1 and S2 have the same polarity when reproducing information from the mark 2809 and non-mark 2810. That is, as shown in Figure 27, the reproduced signals S1 and S2 are of the same polarity for the preformatted region 3003, and of the opposite polarity from each other for the MO data region 3002.

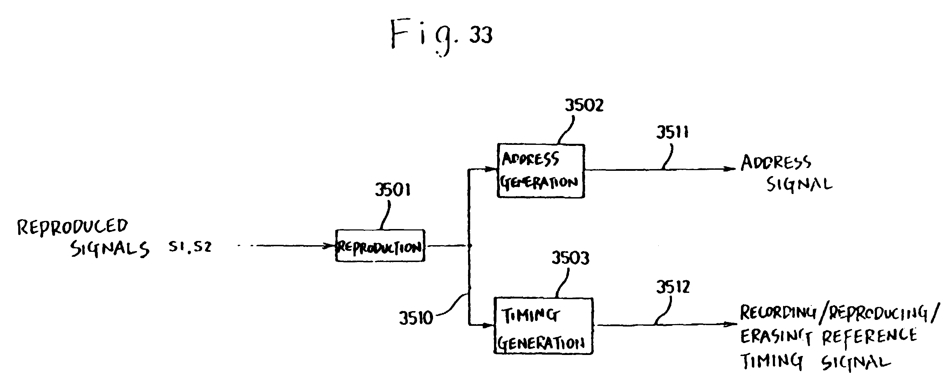

Figure 33 illustrates the reproducing circuit. The reproduced signals S1 and S2 are supplied to a reproducing circuit 3501 which produces a binary-coded output signal 3510. The binary-coded output signal 3510 is fed to an address generating circuit 3502 and also to a timing generation circuit 3503. In the address generating circuit 3502, the sectorby sector address information contained in the preformatted region 3003 shown in Figure 28 is read out from the output signal 3510 to generate an address signal 3511. In the timing generation circuit 3503, a sector mark for sector synchronization which is also contained in the preformatted region is detected to generate a recording/reproducing/erasing reference timing signal 3512. In the magneto-optical disk memory device, the information recording, reproducing, and erasing operations are performed on the sector at the desired address on the basis of the address signal 3511 and the recording/reproducing/erasing reference timing signal 3512.

However, when performing the differential amplification of the above-mentioned magneto-optical reproduced signals, the differential ratio varies because of variations in each device such as the optical system and the magneto-optical disk 3001, the residual signal amplitude of signals obtained from the preformatted region 3003 also varies. This residual signal occurs as a result of differential amplification of the reproduced signals S1 and S2 with a differential ratio, and should be adjusted as low as possible.

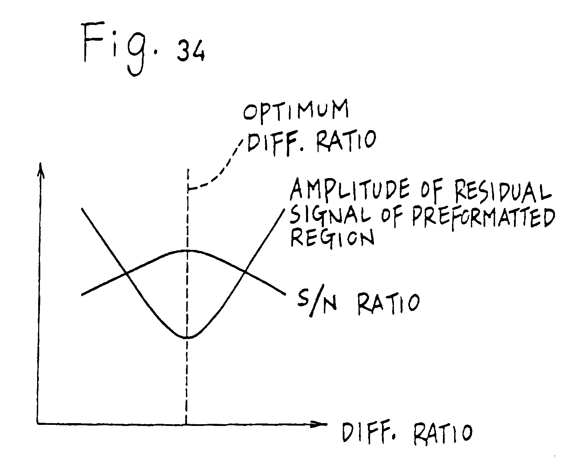

Figure 34 shows the relationships between the differential ratio, the residual signal amplitude occurring with the differential ratio, and the S/N ratio. As the differential ratio deviates from the optimum level shown by a broken line to the increasing or decreasing side, the residual signal amplitude increases and the S/N ratio deteriorates. Since improper setting of the differential ratio can lead to an error in the reproduced data, it is necessary that the differential ratio be set properly. Usually, a variable resistor is used to manually adjust the amplification degree, or the differential ratio, of each of the reproduced signals S1 and S2 while observing the waveform on an oscilloscope or the like. In this case, the variable resistor is adjusted so that the residual signal amplitude is minimized. By setting the residual signal amplitude to the minimum level using the variable resistor, a reproduced signal having a suitable S/N ratio can be obtained.

However, the problem with the above prior art construction is that since the differential ratio must be manually adjusted so that the residual signal amplitude is set to the minimum level, laborious work is required for the adjustment.

There is known from EP-A- 0322 385 a readback circuit for magneto-optic players in which the outputs of two photo detectors are coupled electrically to two inputs of differential circuit. The output of the differential a circuit is supplied through a differential feedback circuit to a field effect transistor whose signal electrodes are connected to a reference potential and one input of the differential circuit respectively. The FET acts as a variable resistance which varies in a manner which is said to accommodate and cancel noise caused by intensity modulation of the reflected light beam and resulting electrical noise signals in the electrical portion of the readback circuit.

There is also known from US-A- 4 691 308 a system in which a first differential amplifier receives the output of a fixed gain amplifier at its negative input terminal and the output of a variable gain amplifier at its positive input terminal. Respective low-pass filters extract the DC components from the outputs of the latter amplifier, the bandwidth of the low-pass filters being selected to be very low (e.g. 0.1 H_{z}). The output signals of the low-pass filter are supplied to a second differential amplifier which constitutes an error detecting circuit for detecting the difference between the averages of the two signals to the first differential amplifier. The output of the error detecting circuit is supplied to an integrator which smooths the output signal to a DC voltage for controlling the gain of the variable gain amplifier. The intention is to form a loop for controlling the gain of the variable gain amplifier for equalising the levels of the two input signals to the first differential amplifier. It will be noted that the establishment of the signals for effecting control of the variable gain amplifier all takes place upstream of the first differential amplifier.

It is an object of the present invention to provide an apparatus for reproducing information from a magneto-optical storage medium of this invention, which overcomes the above-discussed and other disadvantages and deficiencies of the known device.

In accordance with the present invention, an apparatus for reproducing information from a magneto-optical storage medium comprises a differential amplifier for performing the differential amplification of signals reproduced from said storage medium an automatic gain control circuit for receiving said differentially amplified signal and producing an electric gain control signal; and differential ratio determining means for determining a differential ratio control signal, based on said electric gain control signal output from said automatic gain control circuit, said differential amplifier performing the differential amplification in response to said determined differential ratio control signal.

In a preferred embodiment, the apparatus further comprises differential ratio generating means for generating a plurality of temporary differential ratio control signals, said differential amplifier temporarily performing differential amplifications of signals in sequence in response to each of said plurality of temporary differential ratio control signals, and said differential ratio determining means determines one of said temporary differential ratio control signals as the differential ratio control signal, said automatic gain control circuit producing the lowest automatic gain control voltage when said differential amplifier performs the differential amplification of signals in response to said one of said temporary differential ratio control signals.

Thus, the invention described herein makes possible the provision of (1) an apparatus for reproducing information from a magneto-optical storage medium in which the differential ratio can be automatically adjusted to an optimum level; (2) an apparatus for reproducing information from a magneto-optical storage medium which can reproduce information from a magneto-optical storage medium with an improved S/N ratio; (3) an apparatus for reproducing information from a magneto-optical storage medium which has a simplified electric circuit structure; (4) an apparatus for reproducing information from a magneto-optical storage medium which can be constructed in a reduced size; and (5) an apparatus for reproducing information from a magneto-optical storage medium which does not require circuits for detecting the maximum amplitude or envelope in the reproducing operation.

According to the above construction, since the existing AGC circuit is used for the reproducing circuit in the magneto-optical recording and reproducing apparatus, it is not necessary to provide a circuit for detecting the minimum amplitude. That is, the AGC voltage generated by the AGC circuit does not directly represent the reproduced signal amplitude, but increases or decreases in monotonic fashion according to the differential signal. Therefore, by sampling the AGC voltage while varying the differential ratio, the processor can determine the optimum differential ratio based on the sampled values. The optimum differential ratio is the differential ratio at which the sampled AGC voltage is at its minimum.

The invention is described further hereinafter, by way of example only, with reference to the accompanying drawings, in which:-

Figure 1 is a block diagram illustrating essential portions of an apparatus according to the invention.

Figure 2 is a circuit diagram of an AGC amplifier used in the apparatus of Figure 1.

Figure 3 is a graph showing the relationship between the AGC voltage input to a VCA and the gain of the VCA.

Figure 4 is a graph showing the relationship between the AGC voltage and the residual signal amplitude of a preformatted portion.

Figure 5 is circuit diagram of another AGC amplifier.

Figure 6 shows another circuit configuration for shortening the discharge time constant of an AGC voltage generation circuit.

Figure 7 shows waveforms at various portions of the circuit shown in Figure 1.

Figure 8 is a graph showing the relationships between the differential ratios and reproduction characteristics.

Figure 9 is a block diagram showing a controller.

Figure 10 is a block diagram generally illustrating the apparatus according to the invention.

Figure 11 is a block diagram illustrating a recording circuit.

Figure 12 is a block diagram illustrating a reproduction circuit.

Figure 13 is a block diagram illustrating the controller.

Figure 14 is a table illustrating the 2,7 modulation method.

Figure 15 is a diagram illustrating the format of a sector.

Figure 16 is a block diagram showing a semiconductor laser driving circuit.

Figures 17 and 18 show waveforms for recording/erasing and reproducing information in the circuit of Figure 16.

Figure 19 is a block diagram illustrating a timing generation circuit.

Figure 20 is a block diagram illustrating a sector mark detection circuit.

Figure 21 is a diagram illustrating the operation of counters used, in the sector mark detection circuit of Figure 20.

Figure 22 shows waveforms at various portions of the timing generation circuit.

Figure 23 is a block diagram illustrating a signal processing circuit.

Figure 24 shows waveforms at various portions of the signal processing circuit.

Figure 25 shows the waveforms in more detail and illustrates the generation of binary data from MO data portion and preformatted portion.

Figure 26 is a diagram illustrating the recording and erasing operations.

Figure 27 is a diagram illustrating the reproduction operation.

Figures 28 and 29 illustrate preformatted portions and MO data portions in a magneto-optical disk.

Figure 30 is a block diagram showing an optical system for the reproduction operation.

Figures 31 and 32 illustrate the polarities of reproduced signals obtained an MO data portion and a preformatted portion.

Figure 33 is a block diagram showing a reproduction circuit, an address generation circuit and timing generation circuit.

Figure 34 is a graph illustrating the relationships between differential ratios, residual signal amplitude and S/N ratio.

Figure 35 is a circuit diagram showing an envelope circuit.

### DESCRIPTION OF THE PREFERRED EMBODIMENTS

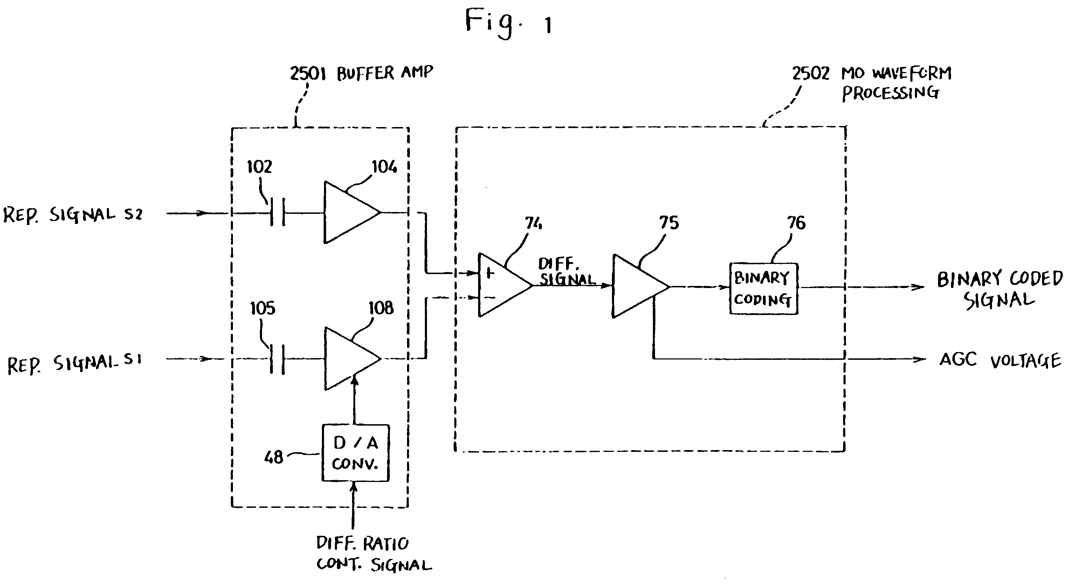

One embodiment of the present invention will be described with reference to Figures 1 to 25.

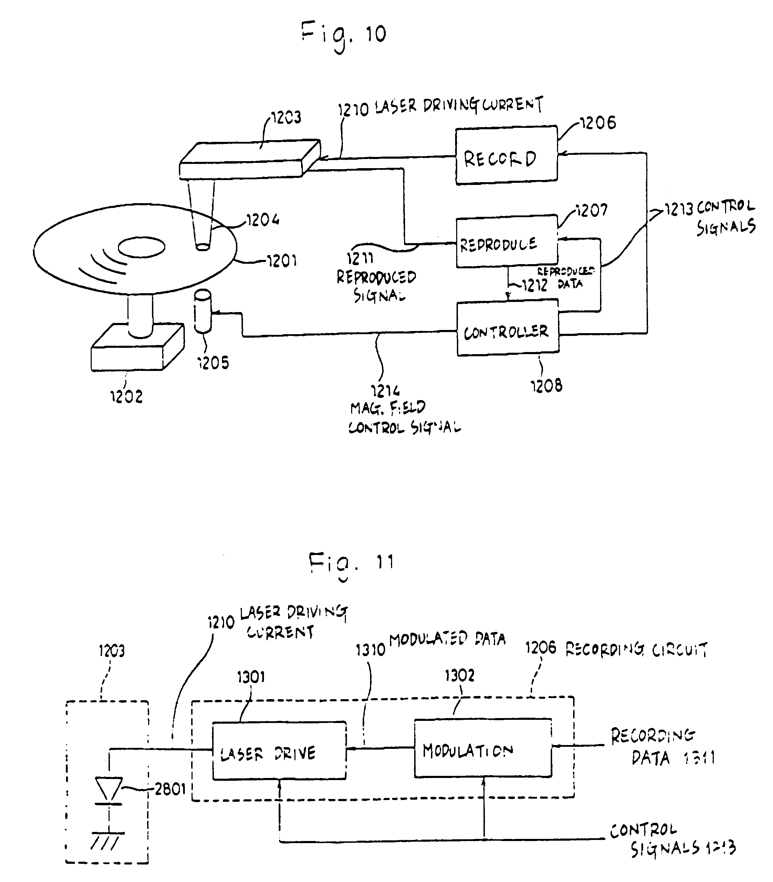

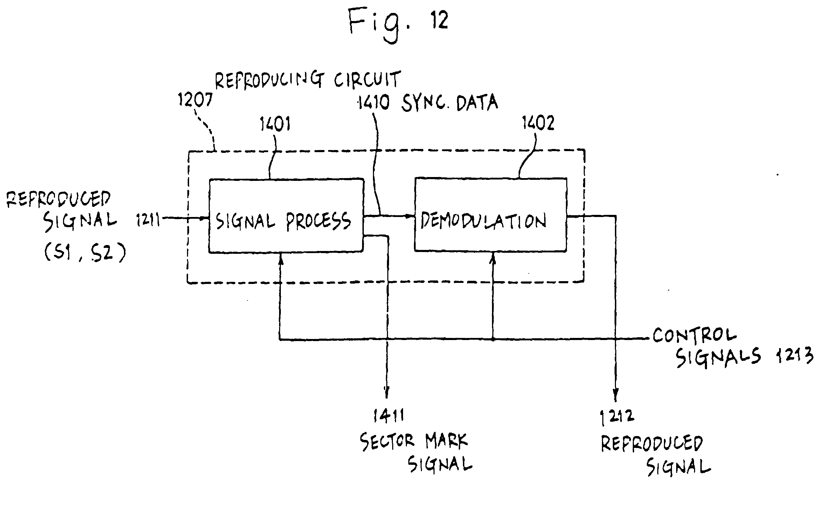

Figure 10 illustrates a magneto-optical memory apparatus according to the invention which can record information to and reproduce and erase information from a magneto-optical disk 1201. The magneto-optical disk 1201 is rotated by a spindle motor 1202, and a laser beam 1204 emitted from an optical head 1203 is used to record, reproduce and erase information. A magnet 1205 generates external magnetic fields for recording and erasing information. The direction of the magnetic fields is reversed by rotating the magnet 1205 by means of a motor or the like. Alternatively, an electromagnet may be used to create the external magnetic fields for recording and erasure of information. A semiconductor laser driving current 1210 is fed from a recording circuit 1206 to a semiconductor laser device 2801 (Figure 11) disposed inside the optical head 1203. By controlling the driving current 1210 for proper light intensity of the semiconductor laser, information is recorded on the magneto-optical disk 1201. The optical head 3203 outputs a reproduced signal 1211 (reproduced signals S1 and S2) to a reproducing circuit 1207. Reproduced data 1212 reproduced in the reproducing circuit 1207 are supplied to a controller 1208. The controller 1208 times various control signals based on the reproduced data 1212, and outputs control signals according to the state of the input signal. That is, the controller 1208 supplies various control signals 1213 to the recording circuit 1206 and the reproducing circuit 1207. The controller 1208 also supplies a magnetic field control signal 1214 to the external magnet 1205 to control the direction of the external magnetic field.

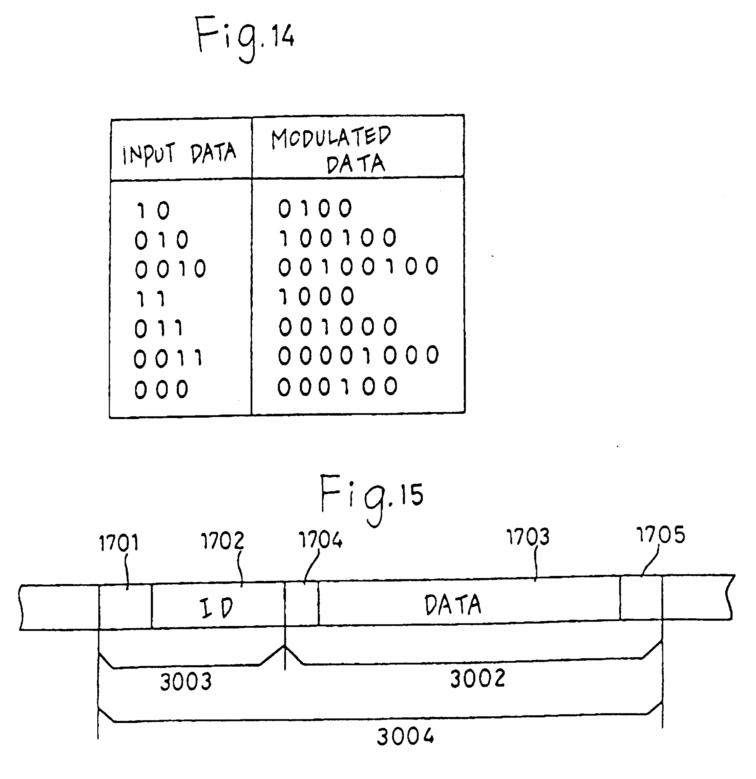

The recording circuit 1206 is shown in Figure 11. Recording data 1311 sent from the controller 1208 are input to a modulation circuit 1302 in the recording circuit 1206. In the modulation circuit 1302, the recording data 1311 are converted into modulated data 1310 in accordance with the recording format. The modulation is performed by a modulation method as described later with reference to Figure 14. The modulated data 1310 are supplied to a semiconductor laser driving circuit 1301. The semiconductor laser driving circuit 1301 generates the semiconductor laser driving current 1210 which is fed to the semiconductor laser device 2801 in the optical head 1203. At the same time, the control signal 1213 is supplied from the controller 1208 to the semiconductor driving circuit 1301 so that the light intensity of the semiconductor laser device 2801 is properly controlled according to the recording, reproducing and erasing operations.

With reference to Figure 12, the reproducing circuit 1207 is described below. The reproduced signal 1211 (reproduced signals S1 and S2) supplied from the optical head 1203 is input to a signal processing circuit 1401 in the reproducing circuit 1207. The signal processing circuit 1401 outputs synchronizing data 1410 to a demodulation circuit 1402 and a sector mark signal 1411 to the controller 1208. The demodulation of the synchronizing data 1410 is performed in accordance with the method shown in Figure 14. That is, the demodulation is performed by reversing the process performed in the modulation circuit 1302 shown in Figure 11. The various control signals 1213 are supplied from the controller 1208 to the signal processing circuit 1401 and the demodulation circuit 1402. The demodulation circuit 1402 supplies the reproduced data 1212 to the controller 1208.

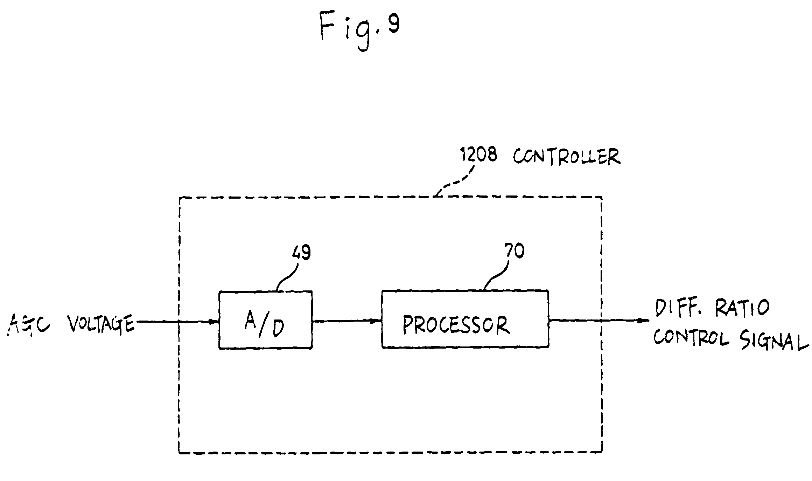

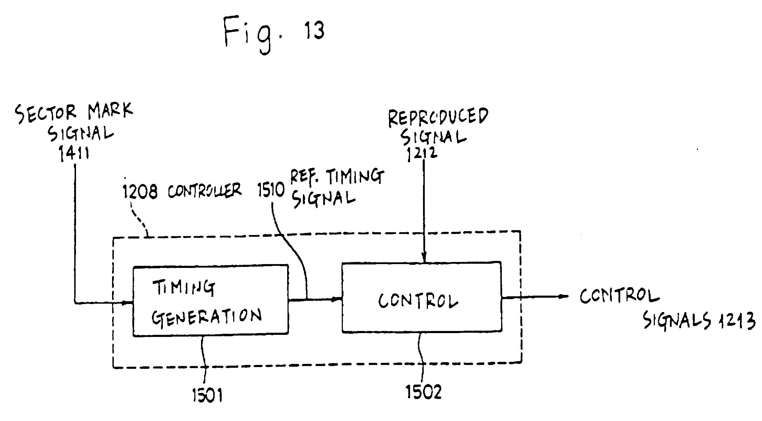

Figure 13 illustrates the controller 1208. Actually, the controller 1208 comprises the elements shown in Figure 13 and also those shown in Figure 9. The sector mark signal 1411 output from the signal processing circuit 1401 is supplied to a timing generation circuit 1501 in the controller 1208, to generate a reference timing signal 1510 which is fed to a control circuit 1502 at sector-by-sector timing. The reproduced data 1212 from the demodulation circuit 1402 is input to the control circuit 1502. The control circuit 1502 creates various control signals 1213 from the above two input signals, and handles transfers of information to and from external apparatus.

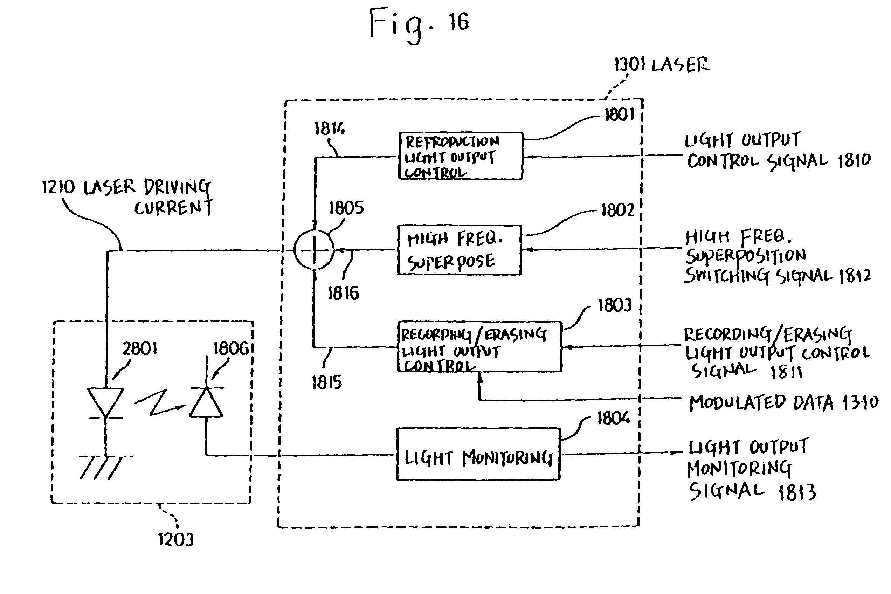

The operation of the recording circuit 1206 shown in Figure 11 will be described with reference to Figures 14 to 18. In the modulation circuit 1302, modulation is performed, for example, in accordance with the modulation method shown in Figure 14. This method is generally known as the 2,7 modulation method. As shown in Figure 14, input data (recording information) are converted into modulated data of a predetermined pattern. Next, the modulated data 1310 are supplied to the semiconductor laser driving circuit 1301 at proper timing in accordance with a format shown in Figure 15. Figure 15 shows the format of a sector 3004 (Figure 28), which is hereinafter referred to as "the sector format". In Figure 15, a preformatted region 3003 is composed of a sector mark portion 1701 for sector-by-sector synchronization timing, and an ID portion 1702 which contains sector address information. As shown in Figure 29, these are engraved in the magneto-optical disk 1201 in the form o£ a physical irregularity (convexo-concave pattern) comprising unrecordable and unerasable marks and non-marks. An MO data region 3002 is composed of a data portion 1703 where information data are recorded, and two gap portions 1704 and 1705. The modulated data 1310 are recorded in the data portion 1703. The recording is made by magneto-optically recording the marks and non-marks as shown in Figures 26 and 27. The gap portions 1704 and 1705 each interposed between the preformattad region 3003 and the MO data region 3002 are margin areas for allowing the recording of information. That is, the gap portions 1704 and 1705 are provided to allow for right or left displacement of the recording start and end positions due to errors such as phase errors occurring between the rotation of the spindle motor 1202 and the sector-by-sector synchronization timing.

Referring to Figure 16, the semiconductor laser driving circuit 1301 is now described. Four control signals 1810 - 1813 are transferred between the semiconductor laser driving circuit 1301 and the controller 1208. From the modulation circuit 1302 (Figure 11), the modulated data 1310 are supplied to the semiconductor laser driving circuit 1301. The reproducing light output control signal 1810 is fed to a reproducing light output control circuit 1801 so that the light output of the semiconductor laser device 2801 in the optical head 1203 is properly controlled for the reproducing operation. The recording/erasing light output control signal 1811 is fed to a recording/erasing light output control circuit 1803 to control the light output of the semiconductor laser device 2801 for the recording/erasing operations. The high-frequency superposition switching signal 1812 is fed to a high-frequency superposing circuit 1802 to reduce noise caused by return light of the semiconductor laser device 2801. output signals 1814 - 1816 from the reproducing light output control circuit 1801, the high-frequency superposing circuit 1802 and the recording/erasing light output control circuit 1803 are added together in an adder circuit 1805 to produce the semiconductor laser driving current 1210 which is fed to the semiconductor laser device 2801. The light output (light intensity) of the semiconductor laser device 2801 is converted by a photodetector 1806 in the optical head 1203 into an electric signal corresponding to the light intensity. A light output monitoring signal 1813 is supplied through a light monitoring circuit 1804 to the controller 1208. The controller 1208 outputs the three control signals 1810, 1811 and 1812 based on the light output monitoring signal 1813. Thus, the light intensity (light output) of the semiconductor laser device 2801 is properly controlled in the reproducing and recording/erasing operations.

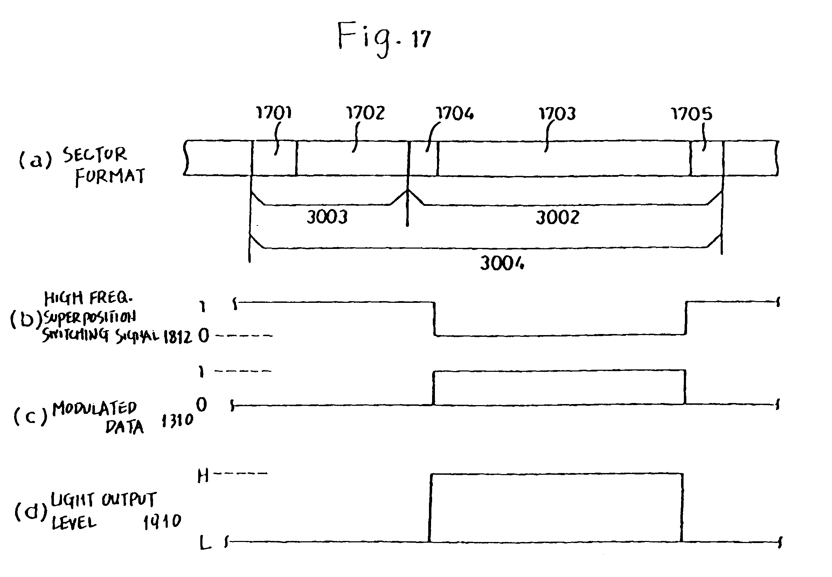

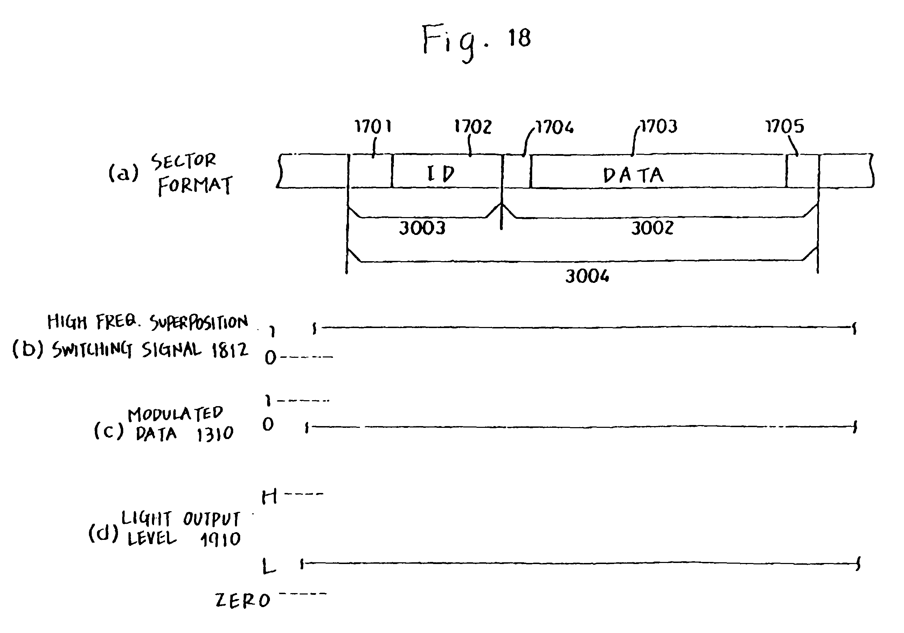

With reference to Figures 17 and 18, the information recording/erasing and reproducing operations in the driving circuit of Figure 16 will be described. As shown in (b) of Figure 17, during the information recording/erasing operations, the high-frequency superposition switching signal 1812 goes low (0) for the data portion 1703, and goes high (1) for other portions. This means that the high-frequency superposition is turned off for the data portion 1703 in the MO data region 3002, and on for portions other than the data portion 1703. This allows the modulated data 1310 to be magneto-optically recorded in the data portion 1703 as shown in (c) of Figure 17. At this time, as shown in (d) of Figure 17, the light output level 1910 (light intensity) of the semiconductor laser device 2801 is high for the data portion 1703, and low for other portions. That is, the information recording/erasing operations are performed on the MO data region 3002 while detecting the sector synchronization timing from the sector mark portion 1701 in the preformatted region 3003 and checking the predetermined address in the address information, etc. read out from the ID portion 1702.

On the other hand, during the information reproducing operation, the high-frequency superposition switching signal 1812 is at a high level (1) for both the preformatted region 3003 and the MO data region 3002 ((b) of Figure 18), and the modulated data 1310 are at a low level (0) ((c) of Figure 18). Furthermore, as shown in (d) of Figure 18, the light output level 1910 is low. That is, the information recorded in the MO data region 3002 is read out for reproduction while detecting the sector synchronizing timing from the sector mark portion 1701 in the preformatted region 3003 ((a) of Figure 18) and sequentially checking the predetermined address in the address information, etc. read out from the ID portion 1702.

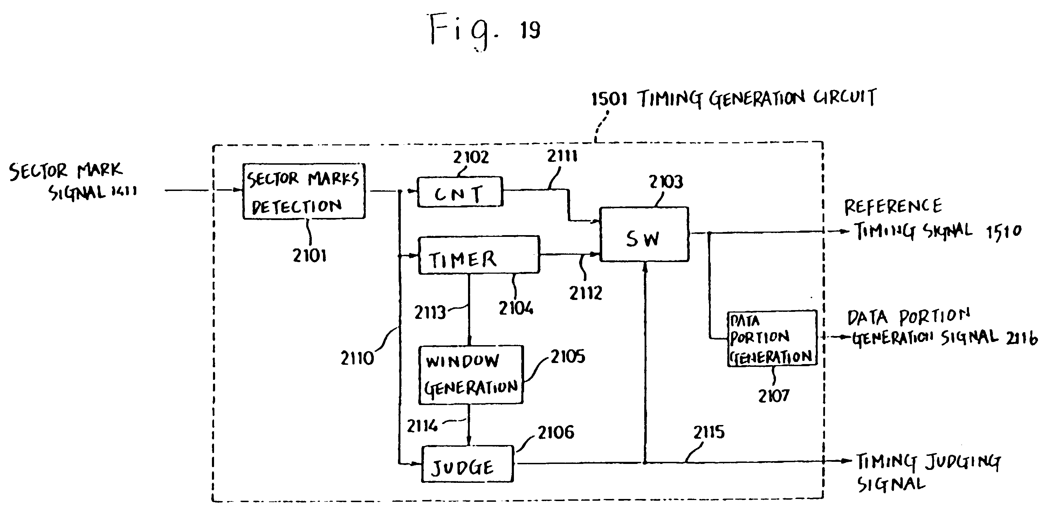

Next, the operations of the timing generation circuit 1501 and control circuit 1502 shown in Figure 13 are described below with reference to Figures 19 to 22. Figure 19 illustrates the timing generation circuit 1501. The sector mark signal 1411 output from the signal processing circuit 1401 (Figure 12) is input to a sector mark detection circuit 2101 of the timing generation circuit 1501. The detection circuit 2101 detects the presence and absence of the sector mark to produce a sector mark detection signal 2110 which is transferred to a counter 2102, to a timer circuit 2104 and also to a judging circuit 2106. The counter 2102 and the timer circuit 2104 generates signals 2111 and 2112, respectively, which are input to a switching circuit 2103. The switching circuit 2103 selects either one of the signals 2111 and 2112, the selected signal being output as a reference timing signal 1510. The reference timing signal 1510 is also input to a data portion generating circuit 2107 for generation of a data portion generation signal 2116. Another output signal 2113 from the timer circuit 2104 is supplied to a window generating circuit 2105 which generates a window signal 2114 to be input to the judging circuit 2106. The judging circuit 2106 produces a timing judging signal 2115 from the window signal 2114 and the sector mark detection signal 2110. On the basis of the timing judging signal 2115, the switching circuit 2103 selects either one of the output signals 2111 and 2112. The reference timing signal 1510, the data portion generating signal 2116 and the timing judging signal 2115 are all transferred to the control circuit 1502 (Figure 13). Based on these signals output from the timing generation circuit 1501 and the reproduced data 1212, the control circuit 1502 generates the previously mentioned various control signals 1213 to transfer to the recording circuit 1206 and the reproducing circuit 1207 (Figure 10) to control information recording, reproduction, and erasure.

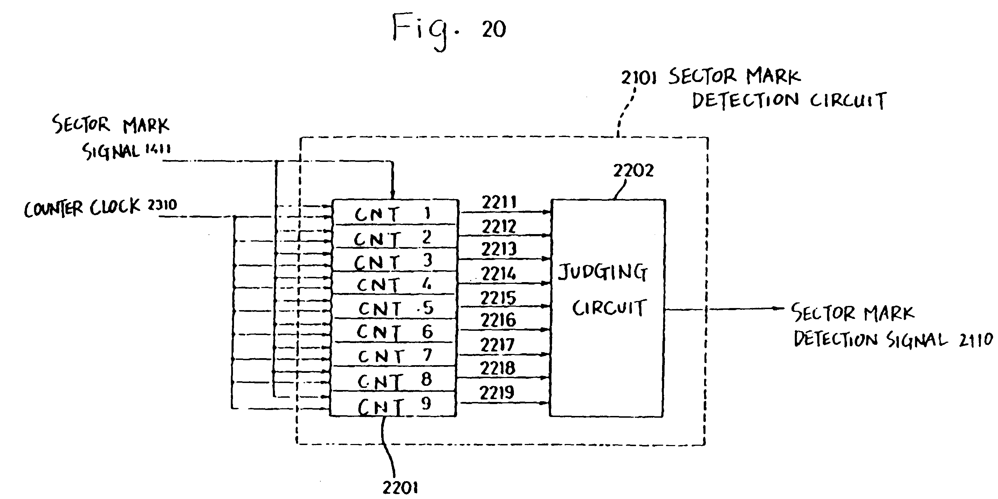

Figure 20 illustrates the sector mark detection circuit 2101 which detects the sector mark portion 1701 (Figure 15) and obtains a synchronization timing necessary for the recording, reproducing and erasing operations of information on a sector-by-sector basis. The sector mark signal 1411 output from the signal processing circuit 1401 (Figure 12) is fed to the inputs of counters 1 - 9 which constitute a counter circuit 2201. Output signals 2211 - 2219 from the counters 1 - 9 are transferred to a judging circuit 2202, the result of which is the sector mark detection signal 2110.

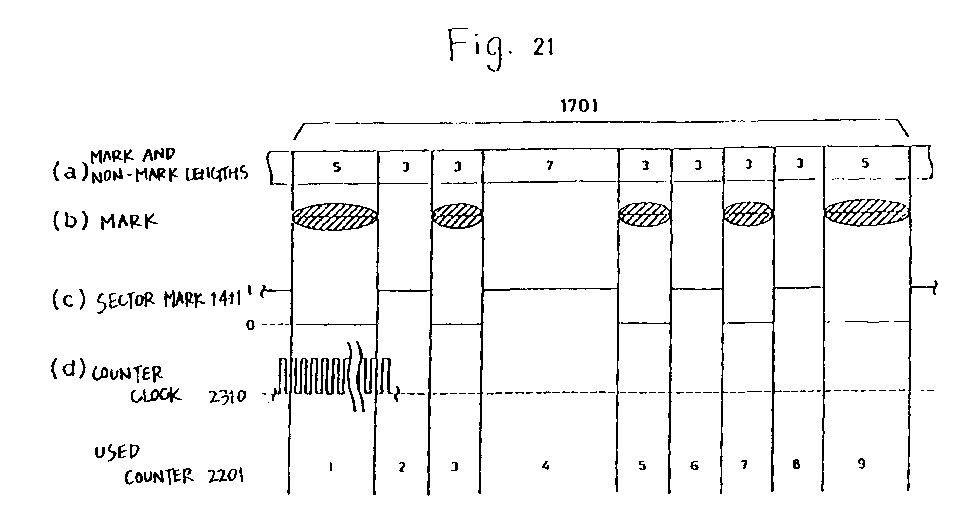

The operations of the counters 1 - 9 are described below with reference to Figure 21. The sector mark portion 1701 has marks and non-marks as shown in (b) of Figure 21. The pattern of this example is engraved with marks spaced apart in such a way that the length ratios of the mark to the non-mark are 5:3:3:7:3:3:3:3:5 as shown in (a) of Figure 21. The sector mark signal 1411 obtained by reproducing the pattern of such marks and non-marks is a binary signal which is at a low level "0" for the mark and at a high level "1" for the non-mark, as shown in (c) of Figure 21. When the sector mark signal 1411 is input to the counters 1 - 9, first the counter 1 counts the number of clock pulses in a counter clock 2310. The number of the counted clock pulses corresponds with the mark length "5". As shown in (d) of Figure 21, the counter clock 2310 has a higher frequency than that of the sector mark signal 1411. When the counted number is within the predetermined range, it means that the first mark (mark length "5") is correctly detected. Next, the non-mark having a non-mark length "3" is detected by the counter 2 in the same manner. Thus, the marks and non-marks in the sector mark portion 1701 are detected until the final mark having a mark length "5" is detected by the counter 9. The thus obtained nine mark/non-mark detected signals 2211 - 2219 are transferred to the judging circuit 2202 which judges if all or part of the nine detected signals match the pattern of the sector mark portion 1701 and determines the order of the marks and non-marks. Only when the pattern is judged to match the sector mark area, the sector mark detection signal 2110 is set low "0". Therefore, the signal 2110 can be used as a sector-by-sector synchronization timing.

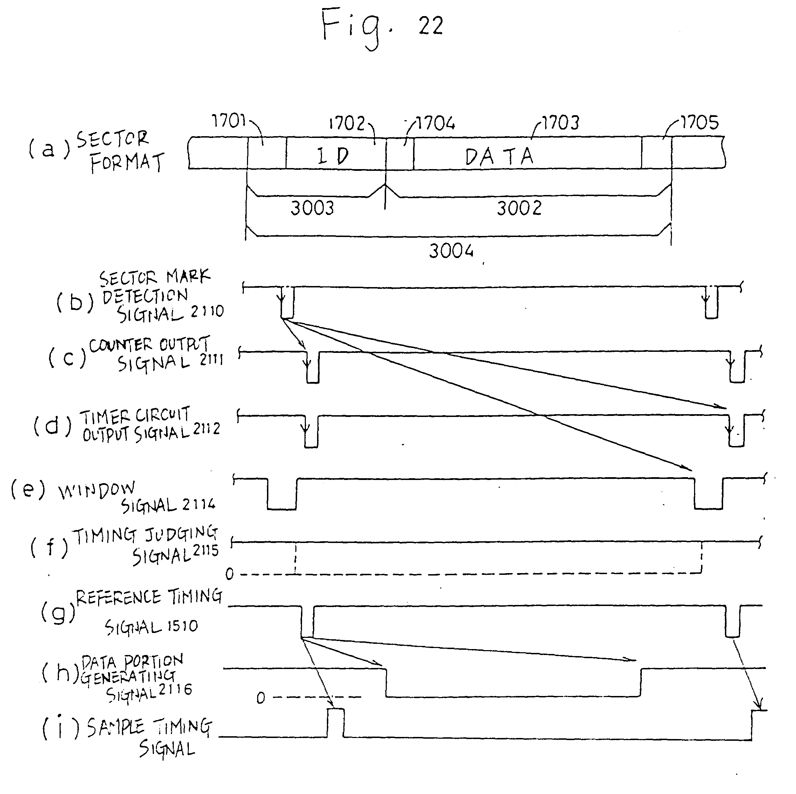

Figure 22 shows the waveforms of various signals generated in the timing generation circuit 1501. As shown in (b) of Figure 22, the sector mark detection signal 2110 is set low when the sector mark portion 1701 in the preformatted region 3003 is detected. The falling edge of the detection signal 2110 functions as the sector synchronization timing. After counting a predetermined number of clock pulses starting at the falling edge of the detection signal 2110, the counter 2102 sets the counter output signal 2111 low ((c) of Figure 22). On the other hand, the count number of the timer circuit 2104 to which the count number of the counter 2102 is added is greater by one sector length. Therefore, as shown in (d) of Figure 22, the falling edge of the timer circuit output signal 2112 generated by the timer circuit 2104 occurs at approximately the same timing as the falling edge of the signal 2111 for the next sector. As shown in (e) of Figure 22, the window signal 2114 from the window generating circuit 2105 provides a predetermined window width starting at the falling edge of the sector mark detection signal 2110 and going low in the vicinity of the falling edge of the sector mark detection signal 2110 for the next sector. The timing judging signal 2115 from the judging circuit 2106 is set high as shown by the solid line in (f) of Figure 22 if there exists a falling edge of the sector mark detection signal 2110 when the window signal 2114 from the window generating circuit 2105 is at a low level. On the other hand, if no falling edge of the sector mark detection signal 2110 exists, the timing judging signal 2115 is set low (as shown by the dotted line in (f) of Figure 22). Thus, the timing judging signal 2115 serves to judge whether the sector mark has been detected within the predetermined range or a detection error has occurred. The switching circuit 2103 selects the signal 2111 when the sector mark has been successfully detected, and the signal 2112 when a detection error has occurred. As a result, as shown in (g) of Figure 22, the reference timing signal 1510 can be generated without fail even if an error in detecting the sector mark has occurred. This means that corrections can be made referring to the preceding sector timing as shown above. The thus obtained reference timing signal 1510 is transferred to the data portion generating circuit 2107. The circuit 2107 is a kind of counter, which outputs the data portion generating signal 2116 that goes low for the data portion 1703 ((h) of Figure 22). Therefore, the data portion generating signal 2116 can be used as a signal to distinguish the preformatted region 3003 from the MO data region 3002. The reference timing signal 1510, the timing judging signal 2115 and the data portion generating signal 2116 ore transferred to the control circuit 1502 shown in Figure 13. The circuit 1502 generates the previously mentioned various control signals 1213 based on these signals.

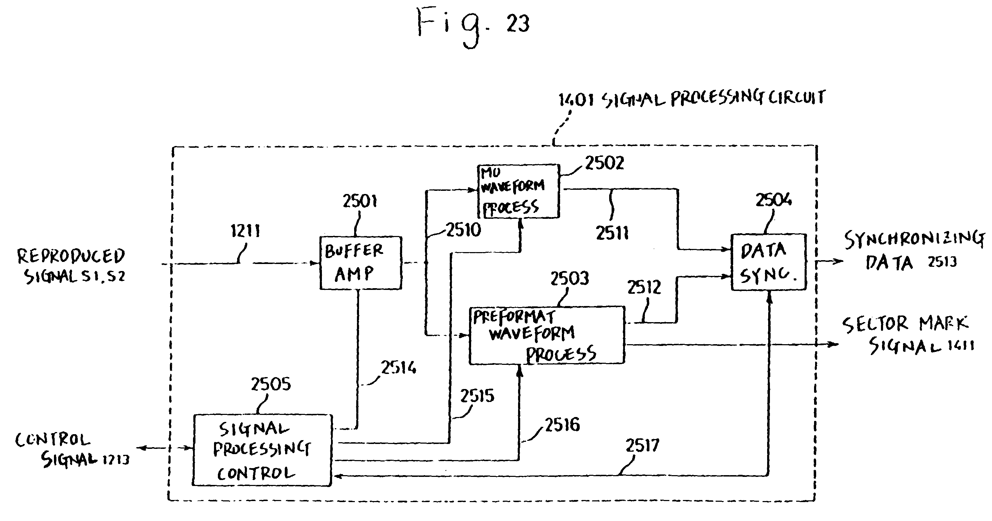

Next, the operation of the signal processing circuit 1401 shown in Figure 12 is described with reference to Figures 23 to 25. The reproduced signal 1211 (reproduced signals S1 and S2) read out from the magneto-optical disk 1201 is fed to a buffer amplifier 2501 in the signal processing circuit 1401. Its output signal 2510 is supplied to an MO waveform processing section 2502 and a preformat waveform processing section 2503. These sections output binary coded signals 2511 and 2512 which respectively correspond to the marks and non-marks on the MO data region 3002 and the preformatted region 3003. These binary coded signals are input to a data synchronizing section 2504. A PLL (Phase Locked Loop) in the data synchronizing section 2504 produces synchronizing data 2513 synchronized with the clock, the synchronizing data 2513 then being transferred to the demodulation circuit 1402 (Figure 12). The preformat waveform processing section 2503 generates the sector mark signal 1411 which is transferred to the timing generation circuit 1501. Control signals 2514 - 2517 for various sections in the signal processing circuit 1401 are fed to and from a signal processing control section 2505. The various control signals 1213 are transferred between the signal processing control section 2505 and the controller 1208 shown in Figure 13.

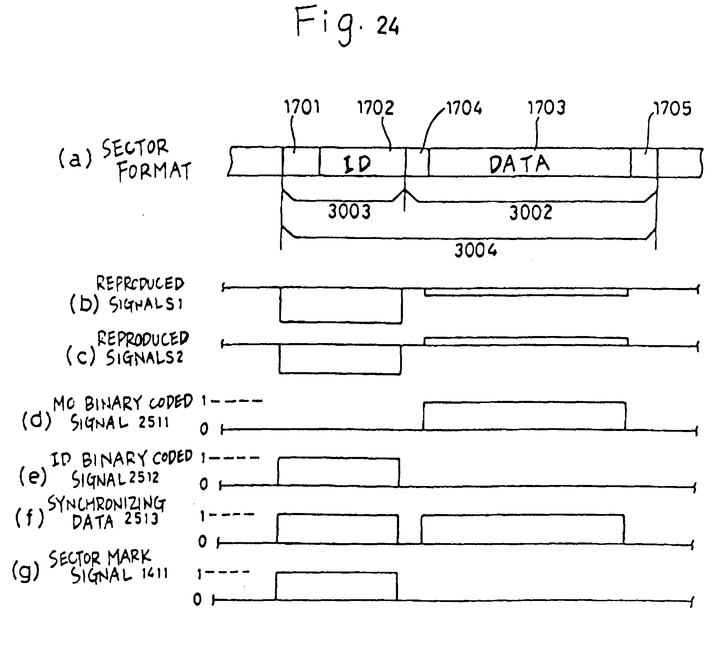

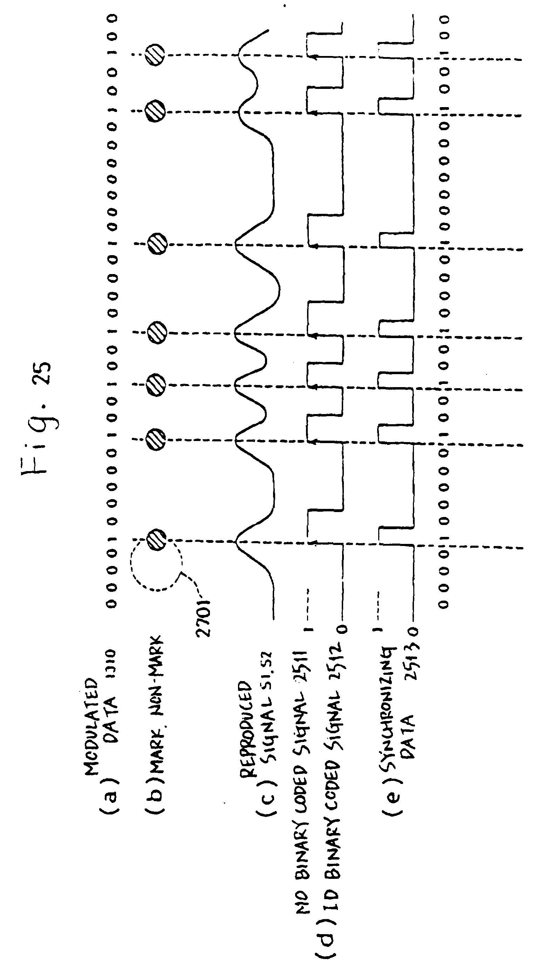

Figures 24 and 25 show the waveforms of signals generated by various sections in the signal processing circuit 1401. As shown in (b) and (c) of Figure 24, the reproduced signals S1 and S2 are differentiated in the MO waveform processing section 2502 where only the information of the MO data portion 3002 is separated and binary coded to generate an MO binary coded signal 2511 ((d) of Figure 24). Also, the reproduced signals S1 and S2 are added in the preformat waveform processing section 2503 where only the information of the preformatted area 3003 is separated and binary coded to generate an ID binary coded signal 2512 and the sector mark signal 1411 ((e) and (g) of Figure 24). The separation between the MO data portion 3002 and the preformatted portion 3003 is accomplished through the differentiation and addition of the reproduced signals S1 and S2 because the reproduced signals S1 and S2 are of the opposite polarity from each other for the MO data region 3002 and of the same polarity for the preformatted region 3003 as shown in Figure 27. As shown in (f) of Figure 24, the MO binary coded signal 2511 and the ID binary coded signal 2512 are converted through the data synchronizing section 2504 into the synchronizing data 2513 synchronized with the clock.

Figure 25 is a diagram illustrating in more detail the waveforms shown in Figure 24. The marks and non-marks recorded on the basis of the modulated data 1310 ((a) of Figure 25) are reproduced by projecting a laser spot 2701 thereon ((b) of Figure 25). As shown in (c) of Figure 25, the reproduced signals S1 and S2 reach their peak at the center of the mark. The MO binary coded signal 2511 and the ID binary coded signal 2512 are generated by detecting the peak, the rising edge thereof coinciding with the peak ((d) of Figure 25). A synchronizing clock is generated from the MO binary coded signal 2511 or the ID binary coded signal 2512 through a PLL in the data synchronizing section 2504, and the synchronizing data 2513 is obtained in synchronism with this clock. As shown in (e) of Figure 25, the modulated data 1310 is reproduced in the synchronizing data 2513 with high fidelity.

Automatic adjustment of the differential ratio will be described with reference to Figure 1. As shown in Figure 1, the reproduced signal S1 is fed to a voltage controlled amplifier 108 (hereinafter abbreviated as "VCA") through an AC coupling capacitor 105 in the buffer amplifier 2501. The output from the VCA 108 is supplied to the inverting input of a differential amplifier 74 in the MO waveform processing section 2502. The reproduced signal S2 is fed to an amplifier 104 through an AC coupling capacitor 102 in the buffer amplifier 2501. The output from the amplifier 104 is coupled to the non-inverting input of the differential amplifier 74. The gain of the amplifier 104 is fixed, while that of the VCA 108 is varied by an applied differential ratio control signal (described later). This allows the differential ratio to be varied. A differential signal from the differential amplifier 74 is fed to an AGC amplifier 75 which is an AGC circuit controlling the amplitude of the signal at a constant level. An output signal from the AGC amplifier 75 is binary coded in a binary coding circuit 76 and is output as a binary coded signal on the basis of which reproduced data is generated. The AGC amplifier 75 also outputs an AGC voltage to an A/D converter 49 (Figure 9) in the controller 1208.

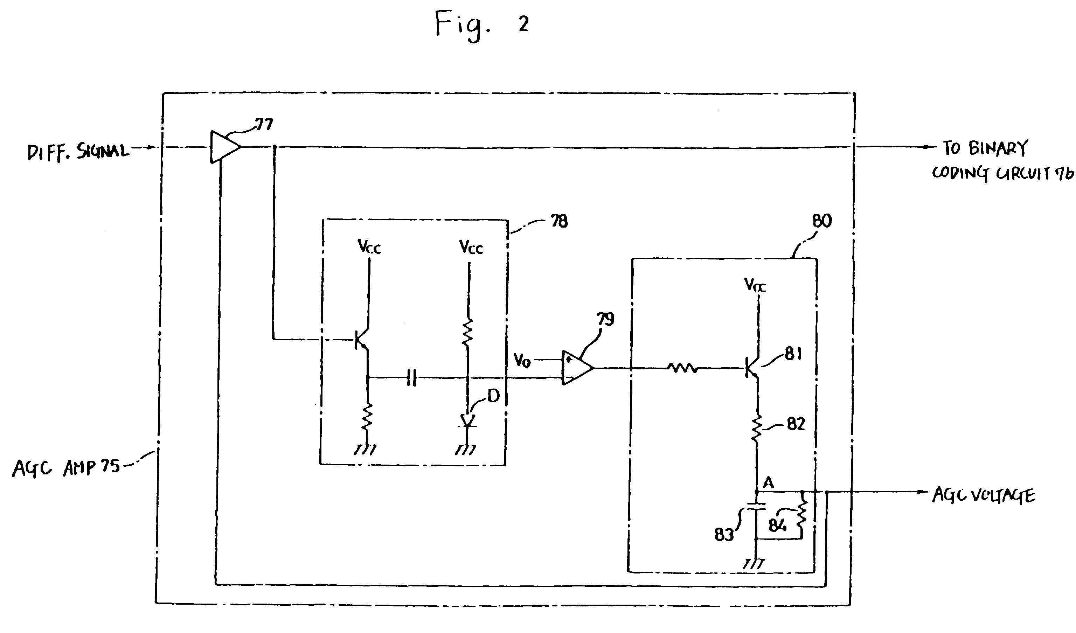

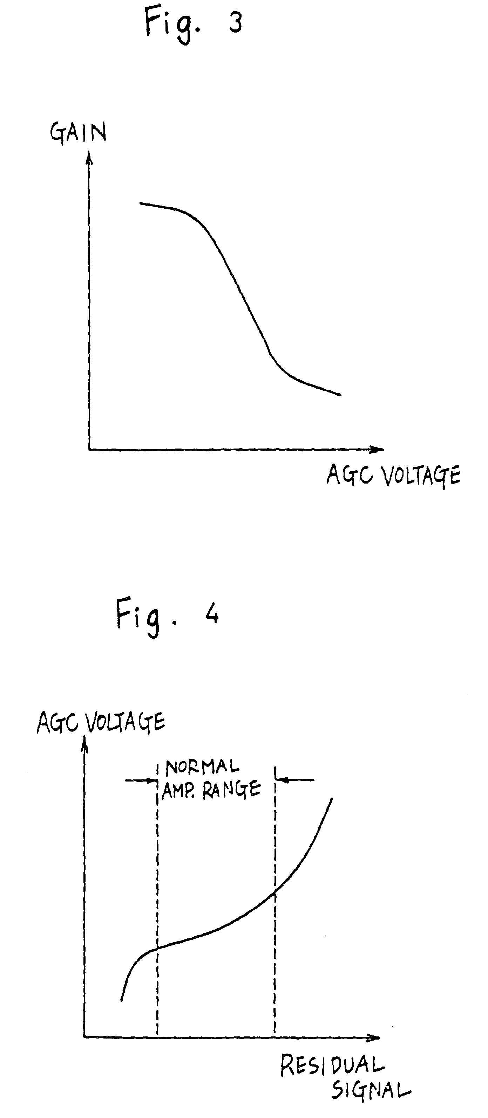

An example of the above-mentioned AGC amplifier 75 will be described with reference to Figures 2 to 4. As shown in Figure 2, the AGC amplifier 75 mainly comprises a clamping circuit 78, a comparator 79, an AGC voltage generating circuit 80, and a VCA 77. The differential signal generated by the differential amplifier 74 is applied to the VCA 77. The gain of the VCA 77 varies according to the AGC voltage from the AGC voltage generating circuit 80, the gain increasing as the AGC voltage increases and decreasing as it decreases, as shown in Figure 3. An output from the VCA 77 is coupled to the binary coding circuit 76 (Figure 1) as well as to an input of the clamping circuit 78. In the clamping circuit 78, the DC component is removed from the output of the VCA 77, while the positive peak of its AC component (peak to peak value) is clamped by a diode D in the circuit 78 to the forward drop voltage of the diode D, and the negative peak is not clamped but applied directly to the inverting input of the comparator 79 at the next stage. The comparator 79 compares the magnitude of the output from the clamping circuit 78 with that of a reference voltage V₀ applied to its non-inverting input. The AGC voltage generating circuit 80 outputs an AGC voltage based on the output from the comparator 79.

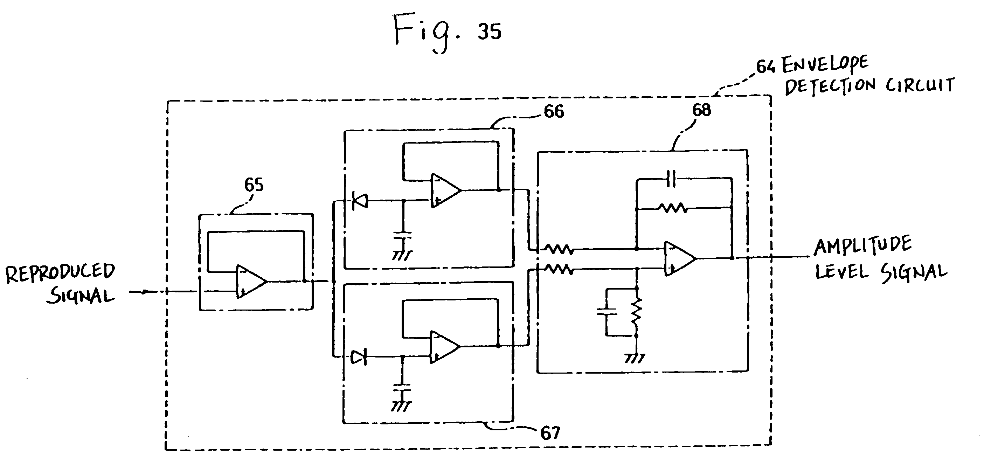

When the output amplitude of the clamping circuit 78 exceeds the reference voltage V₀, the output of the comparator 79 is set high to turn on a transistor 81, which causes a capacitor 83 to be charged by a power supply V_{cc} through a charging resistor 82 with a resultant increase in the voltage across the capacitor 83. In this case, the charge time constant is determined by the values of the charging resistor 82 and the capacitor 83. The AGC voltage appearing at a connecting point between the charging resistor 82 and the capacitor 83, i.e., the voltage appearing across the capacitor 83, is applied to the VCA 77 as a gain control voltage to reduce the gain of the VCA 77. On the other hand, when the output amplitude of the clamping circuit 78 is within the reference voltage V₀, the output of the comparator 79 is set low to turn off the transistor 81, causing the capacitor 83 to be discharged through a discharging resistor 84. In this case, the discharge time constant is determined by the values of the discharging resistor 84 and the capacitor 83. This discharge causes the AGC voltage to decrease, thus increasing the gain of the VCA 77. Between the residual signal amplitude and AGC voltage of the preformatted region, there is a relationship as shown in Figure 4, from which it can be seen that the AGC voltage increases in monotonic proportion to the residual signal amplitude within the normal amplitude range. That is, the maximum and minimum values of the AGC voltage correspond to the maximum and minimum values of the residual signal amplitude. The clamping circuit 78 maybe a full-wave rectifier circuit. As a circuit for detection of the minimum (or maximum) of the residual signal amplitude, an envelope detection circuit 64 shown in Figure 35 is well known in the art and generally employed. The circuit 64 mainly comprises a buffer circuit 65, a first sample hold circuit 66, a second sample hold circuit 67, and a differential amplifier circuit 68. A reproduced signal is fed through the buffer circuit 65 to the first and second sample hold circuits 66 and 67 which hold the upper and lower peak values of the envelope, and thereafter the differential amplifier circuit 68 outputs a residual signal amplitude corresponding to the peak-to-peak value of the reproduced signal. Such an envelope detection circuit is described in Japanese Laid-open Patent publication (Kokai) No.58(1983)-80138. The provision of such a separate circuit for detection of the minimum value of the residual signal amplitude during reproduction may make the entire circuit configuration complex and therefore may lead to an increase in overall costs.

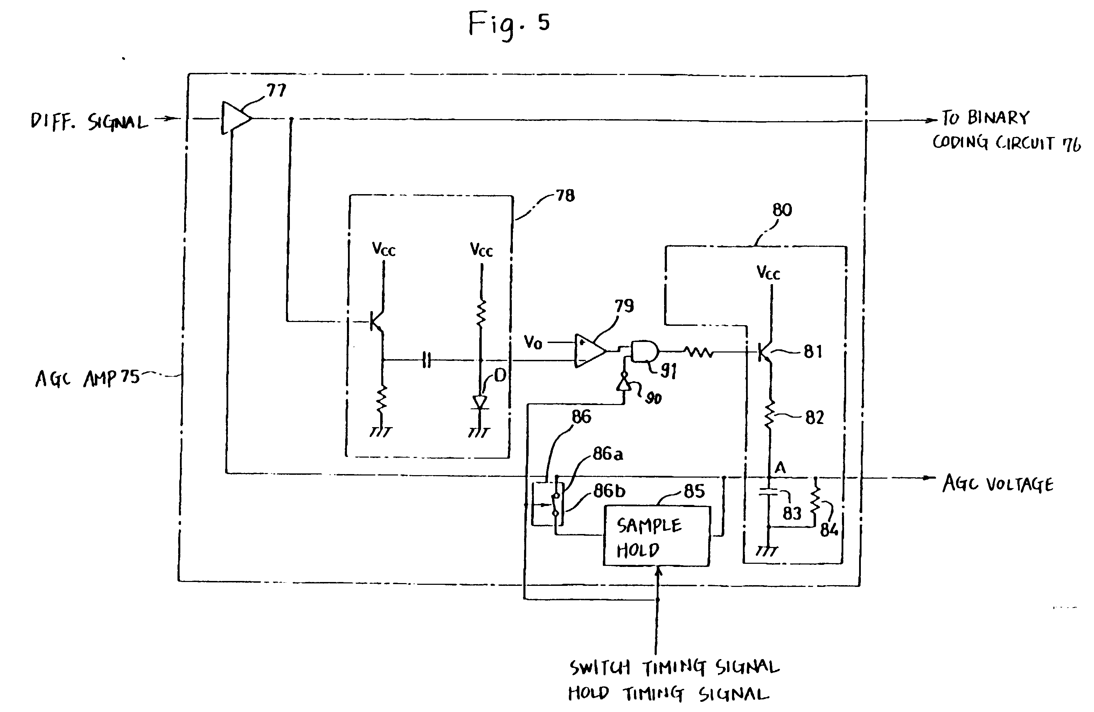

Another example of the AGC amplifier is described below with reference to Figure 5, wherein the same reference numerals are used to indicate the portions having the same functions as the parts used in the above described AGC amplifier, detailed descriptions of such parts being omitted.

In the AGC amplifier of Figure 5, the AGC voltage is applied to the VCA 77 through a sample hold circuit 85 and an analog switch 86. The sample hold circuit 85 and the analog switch 86 are provided to hold the AGC voltage at the value immediately preceding the recording/erasing operation. The switch 86 operates in accordance with a switching signal which is obtained by inverting the high-frequency superposition switching signal 1812 (Figures 17 and 18). The switch timing signal is also supplied to an AND gate 91 via an inverter 90. The output of the comparator 79 is coupled to the other input of the AND 91. The output of the AND 91 is supplied to the base of the transistor 81. In the reproducing operation, the switch timing signal is always set to high so that the switch 86 is opened and the base level of the transistor 81 coincides with the output of the comparator 79. Therefore, the AGC voltage is applied to the VCA 77 directly through a contact 86a of the analog switch 86. In the recording/erasing operations, the switch timing signal is high in the data portion 1703, and low in other portions. When the switch timing signal is low, the AGC voltage is applied directly to the VCA 77 as the same manner as above. When the switch timing signal is high (the laser spot reaches the data portion 1703), the switch 86 is closed and the output of the AND 91 is low. In response to a hold timing signal which is the inversion of the high-frequency superposition switching signal 1812, the sample hold circuit 81 is actuated to hold the AGC voltage at the value immediately preceding the recording/erasing operation using a hold timing signal. This serves to prevent the operation of the VCA 77 from being affected by recording/erasing operation, thus further enhancing the reliability. The above sample hold circuit 85 may include, for example, an A/D converter and a D/A converter.

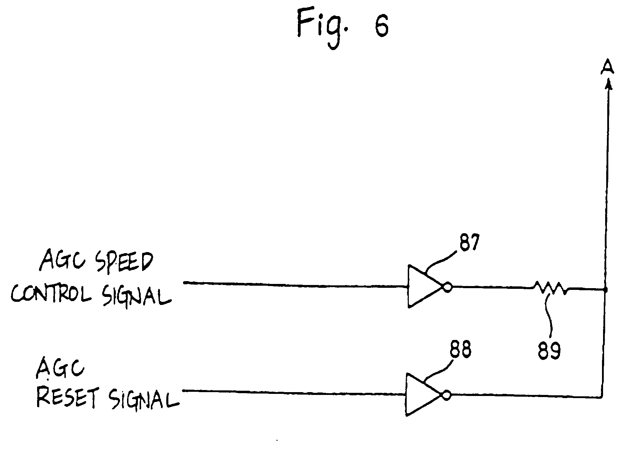

When recording is performed by varying the differential ratio sector by sector in order to determine the optimum differential ratio, the AGC amplifier used for this purpose is required to have a quick response. To achieve this purpose, a circuit is used which improves the response by shortening the discharge time constant of the capacitor 83 in the AGC voltage generating circuit 80 of the AGC amplifier. Such a circuit is described below with reference to Figure 6. This circuit mainly comprises open collectors 87 and 88 and a discharging resistor 89. The output of the open collector 88 is connected to the connecting point A between the charging resistor 82 and the capacitor 83 shown in Figures 2 and 5. An AGC speed control signal is fed to the open collector 87, while an AGC reset signal is applied to the open collector 88. The AGC speed control signal is set high during test lighting, etc. to determine the optimum recording conditions. At this time, the output of the open collector 87 is set low, causing the discharging resistor 89 to be connected in parallel with the discharging resistor 84 shown in Figures 2 and 5. As a result, the time needed for discharging the capacitor 83 is shortened. On the other hand, the AGC reset signal is set high when the system is started or a system error has occurred. At this time, since the discharge resistor 84 is short-circuited, discharging is completed instantaneously.

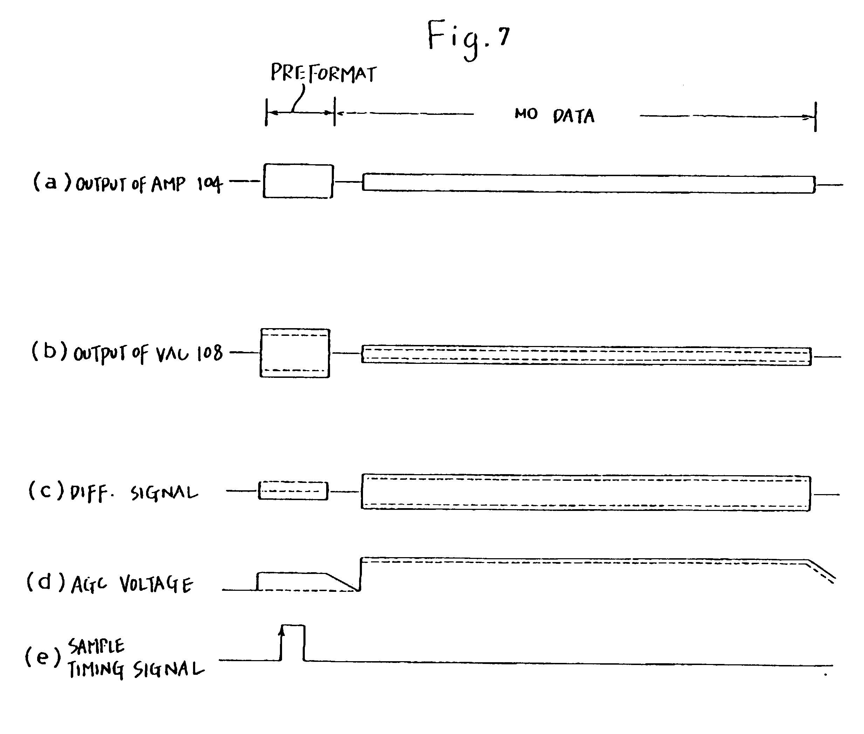

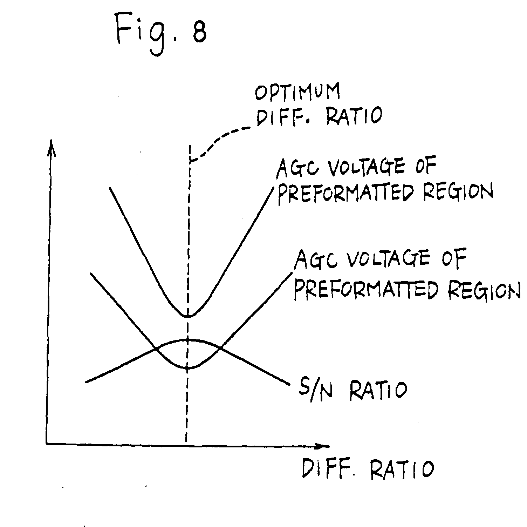

Next, a manner of determining the optimum differential ratio will be described with reference to Figures 7 to 9. As shown in Figure 8, as the differential ratio is varied (whether to the increasing side or decreasing side), various reproduction characteristics change; the AGC voltage for the preformatted area increases and the S/N ratio deteriorates as the differential ratio deviates from the optimum level shown by the dotted line in Figure 8. Also, at this time, the amplitude of the residual signal in the preformatted area increases. Therefore, the reproduced signals must be reproduced using the optimum differential ratio. An example of determining the optimum differential ratio is described below.

Suppose the output waveform from the amplifier 104 for the reproduced signal S2 is represented by the waveform shown by the solid line in (a) of Figure 7, and the output waveform from the VCA 108 for the reproduced signal S1 is represented by the waveform shown by the solid line in (b) of Figure 7. In this case, the differential signal generated by the differential amplifier 74 gives the waveform as shown in (c) of Figure 7, and the residual signal amplitude corresponding to the preformatted region not become zero. The AGC voltage generated by the AGC amplifier 75 gives the wave form as shown in (d) of Figure 7. The processor 70 (Figure 9) presets a plurality of temporary differential ratios, and a differential ratio control signal corresponding to each of these temporary differential ratios is fed to the VCA 108 via a D/A converter 48 in the buffer amplifier 2501 (Figure 1). In accordance with the differential ratio control signal, the gain of the VCA 108 is varied, and the amplified output is transferred to the differential amplifier 74. Then, based on the output (differential signal) from the differential amplifier 74, the AGC amplifier 75 generates the AGC voltage of the corresponding level. This AGC voltage is supplied to the processor 70 through an A/D converter 49 in the controller 1208 to be sampled. After the above-described operation has been repeated by the number of the temporary differential ratios, the processor 70 calculates the minimum value of the AGC voltage from these inputs, and the differential ratio control signal corresponding to the differential ratio at that time is stored in a memory device (not shown) such as a RAM or EPROM. Thereafter, reproduction is performed using the thus determined differential ratio (namely, the differential ratio stored in the memory device). For example, the broken lines in (b) - (d) of Figure 7 show the waveforms of respective signals when the differential ratio is at its minimum, at which time the differential signal for the preformatted region is nearly zero.

The sampling of the AGC voltage by the processor 70 is performed, for example, at the rising edge of a sample timing signal shown in (e) of Figure 7. The sample timing signal is generated by the control circuit on the basis of the sector-by-sector reference timing signal and the data signal. The sector and track on which the differential adjustment is to be done may be predetermined, and the sample timing signal may be generated within the preformatted region using the reference timing signal, while checking that sector and track using the data signal. More specifically, the sample timing signal can be obtained by inverting the reference timing signal 2116 and delaying the inverted signal as shown in (i) of Figure 22. Further, the above differential adjustment may be done at the factory, after resetting the apparatus, or when reloading a disk. When doing the differential adjustment at the factory, a disk specifically designed for differential adjustment may be used, or a processor, an A/D converter and a program which are specifically designed for differential adjustment may be provided separately from the apparatus itself. Instead of the D/A converter 48, an F/V converter for producing voltage, the magnitude of which varies according to the input frequency or other device may be used.

According to this embodiment, as described above, by obtaining the optimum differential ratio and reproducing the information with that differential ratio, highly reliable reproduced signals can be obtained. Since it is not necessary to provide circuits for detecting the maximum amplitude or envelope of reproduced signals at the time of reproduction, the entire circuit configuration can be made simple, making it possible to reduce the size of the apparatus and therefore to reduce the overall costs. Also, since the differential ratio adjustment to minimize the amplitude of the residual signal in the preformatted area can be made automatically by the processor, the invention also offers the advantage of eliminating laborious work process necessary for the adjustment.

In the above, a magneto-optical memory apparatus which can reproduce, record and erase information is described. It is apparent to those skilled in the art that the present invention is also applicable to an apparatus which can only reproduce information.

## Claims

1. An apparatus for reproducing information from a magneto-optical storage medium, comprising a differential amplifier (74) for performing the differential amplification of signals reproduced from said storage medium,
said apparatus being characterised by:
an automatic gain control circuit (75) for receiving said differentially amplified signal and producing an electric gain control signal; and
differential ratio determining means (1208) for determining a differential ratio control signal, based on said electric gain control signal output from said automatic gain control circuit,
said differential amplifier (74) performing the differential amplification in response to said determined differential ratio control signal.

2. An apparatus according to claim 1, wherein said apparatus further comprises differential ratio generating means (70) for generating a plurality of temporary differential ratio control signals, said differential amplifier (74) temporarily performing differential amplifications of signals in sequence in response to each of said plurality of temporary differential ratio control signals, and
said differential ratio determining means (1208) determines one of said temporary differential ratio control signals as the differential ratio control signal, said automatic gain control circuit (74) producing the lowest automatic gain control voltage when said differential amplifier (74) performs the differential amplification of signals in response to said one of said temporary differential ratio control signals.

## Patentansprüche

1. Vorrichtung zum Wiedergeben von Information von einem magnetooptischen Speichermedium, mit einem Differenzverstärker (74) zum Ausführen einer Differenzverstärkung von vom Speichermedium abgespielten Signalen, **gekennzeichnet durch**
- eine Schaltung (75) zur automatischen Verstärkungsregelung, die das differenzverstärkte Signal erhält und ein elektrisches Verstärkungseinstellsignal erzeugt; und
- eine Differenzverhältnis-Ermittlungseinrichtung (1208) zum Ermitteln eines Differenzverhältnis-Einstellsignals auf Grundlage des von der Schaltung für automatische Verstärkungsregelung ausgegebenen elektrischen Verstärkungseinstellsignals;
- wobei der Differenzverstärker (74) die Differenzverstärkung auf das ermittelte Differenzverhältnis-Einstellsignal hin ausführt.

2. Vorrichtung nach Anspruch 1, die ferner eine Differenzverhältnis-Erzeugungseinrichtung (70) zum Erzeugen mehrerer zeitweiliger Differenzverhältnis-Einstellsignale aufweist, wobei der Differenzverstärker (74) zeitweilig Differenzverstärkungen von Signalen der Reihe nach auf jedes der mehreren zeitweiligen Differenzverhältnis-Einstellsignale hin ausführt; und
- die Differenzverhältnis-Ermittlungseinrichtung (1208) eines der zeitweiligen Differenzverhältnis-Einstellsignale als Differenzverhältnis-Einstellsignal ermittelt, wobei die Schaltung (74) für automatische Verstärkungsregelung die niedrigste automatische Verstärkungseinstellspannung erzeugt, wenn der Differenzverstärker (74) die Differenzverstärkung von Signalen auf eines der zeitweiligen Differenzverhältnis-Einstellsignale hin ausführt.

## Revendications

1. Appareil pour reproduire des informations provenant d'un support de mémorisation magnéto-optique, comprenant un amplificateur différentiel (74) pour effectuer l'amplification différentielle de signaux reproduits provenant dudit support de mémorisation,
ledit appareil étant caractérisé par:
un circuit de commande automatique de gain (75) pour recevoir ledit signal amplifié différentiellement et produire un signal de commande de gain électrique; et
des moyens de détermination de rapport différentiel (1208) pour déterminer un signal de commande de rapport différentiel, en fonction dudit signal de commande de gain électrique délivré en sortie par ledit circuit de commande automatique de gain,
ledit amplificateur différentiel (74) effectuant l'amplification différentielle en réponse audit signal de commande de rapport différentiel déterminé.

2. Appareil selon la revendication 1, dans lequel ledit appareil comprend également des moyens de génération de rapport différentiel (70) pour générer une pluralité de signaux de commande de rapport différentiel temporaires, ledit amplificateur différentiel (74) effectuant temporairement des amplifications différentielles de signaux dans une séquence en réponse à chaque signal de ladite pluralité de signaux de commande de rapport différentiel temporaires; et
lesdits moyens de détermination de rapport différentiel (1208) déterminent l'un desdits signaux de commande de rapport différentiel temporaires comme étant le signal de commande de rapport différentiel, ledit circuit de commande automatique de gain (74) produisant la tension de commande automatique de gain la plus basse lorsque ledit amplificateur différentiel (74) effectue l'amplification différentielle de signaux en réponse audit un desdits signaux de commande de rapport différentiel temporaires.
